# EUROPÄISCHE PATENTANMELDUNG

(11) **EP 4 671 933 A1**
(43) Veröffentlichungstag der Anmeldung: **31.12.2025**
(21) Anmeldenummer: 25184643.2
(22) Anmeldetag: 23.06.2025
(51) Int. Cl.: G06F 3/0354, G06F 3/039

(54) **COMPUTERMAUS UND COMPUTER-EINGABEGERÄTESYSTEM**

(30) Priorität: 27.06.2024 DE 102024118203
(71) Anmelder: Bancescu, Andreas Robert, 94060 Pocking (DE)
(72) Erfinder: Bancescu, Andreas Robert, 94060 Pocking (DE)
(74) Vertreter: Böss, Dieter Alexander

(57) **Zusammenfassung**

Die Erfindung betrifft eine Computermaus (1), unter anderem aufweisend ein an der Oberseite eines Gehäuses (2) angeordnetes Tastelement (6), das ausgebildet ist zu seiner Betätigung mittels eines Handballens einer Hand einer Person, welche die Computermaus (1) handhabt, wobei das Tastelement (6) zwischen einer Ruhestellung, in welcher ein dem Tastelement (6) zugeordneter elektrischer Schalter (7) der Computermaus (1) sich in einen unaktivierten Schaltzustand befindet, und einer Betätigungsstellung, in welcher der dem Tastelement (6) zugeordnete elektrische Schalter (7) sich in einen aktivierten Schaltzustand befindet, verstellbar gelagert ist, und aufweisend eine mit dem Gehäuse (2) verbundene Handauflage (8), die über dem Gehäuse (2) und dem Tastelement (6) angeordnet ist, und die einen ebenen, horizontal verlaufenden ersten Auflageabschnitt (9.1) aufweist, der zum Ablegen der Fingerabschnitte im Handbereich der proximalen Phalangen ausgebildet ist und die einen ebenen, in Richtung des Tastelements (6) abschüssig ausgerichteten zweiten Auflageabschnitt (9.2) aufweist, der zum Ablegen der Fingerabschnitte im Handbereich der Mittelhandknochen ausgebildet ist. Die Erfindung betrifft außerdem ein Computer-Eingabegerätesystem (22) mit einer solchen Computermaus (1).

## Beschreibung

Die Erfindung betrifft eine Computermaus, aufweisend ein Gehäuse, einen im Gehäuse angeordneten Sensor, der ausgebildet ist zur Erfassung einer Bewegung der Computermaus relativ zu einer Oberfläche, auf der die Computermaus aufgelegt ist und auf der sich die Computermaus durch manuelles Verstellen mittels der Hand einer Person bewegen kann, und ein an der Oberseite des Gehäuses angeordnetes Tastelement, das ausgebildet ist zu seiner Betätigung mittels eines Handballens einer Hand einer Person, welche die Computermaus handhabt, wobei das Tastelement zwischen einer Ruhestellung, in welcher ein dem Tastelement zugeordneter elektrischer Schalter der Computermaus sich in einen unaktivierten Schaltzustand befindet, und einer Betätigungsstellung, in welcher der dem Tastelement zugeordnete elektrische Schalter sich in einen aktivierten Schaltzustand befindet, verstellbar gelagert ist.

Die DE 20 2012 001 460 U1 beschreibt ein ergonomisches Bediengerät zur Bedienung durch eine Hand, umfassend ein Gehäuse mit einer Oberflächenkontur für die Hand, wobei die Oberflächenkontur an anatomische Merkmale der Hand angepasst ist, wobei die Oberflächenkontur an die individuelle Größe der Handfläche angepasst ist, wobei das Gehäuse eine Vielzahl von Schichten aus einem einzigen Kunststoff umfasst, und wobei die Oberflächenkontur an eine individuelle Position der Gelenke der Hand angepasst ist, und die Oberflächenkontur an die individuellen Phalangen der Finger der Hand und an die individuellen Handwurzelknochen der Hand angepasst ist.

Aufgabe der Erfindung ist es, eine Computermaus zu schaffen, die auch von Personen mit eingeschränkter oder nicht mehr vorhandener Fingerbeweglichkeit zuverlässig und ermüdungsfrei manuell gesteuert werden kann, um Eingaben an einem Computer tätigen zu können.

Die Aufgabe wird gelöst durch eine Computermaus, aufweisend:
- ein Gehäuse,
- einen im Gehäuse angeordneten Sensor, der ausgebildet ist zur Erfassung einer Bewegung der Computermaus relativ zu einer Oberfläche, auf der die Computermaus aufgelegt ist und auf der sich die Computermaus durch manuelles Verstellen mittels der Hand einer Person bewegen kann,
- ein an der Oberseite des Gehäuses angeordnetes Tastelement, das ausgebildet ist zu seiner Betätigung mittels eines Handballens einer Hand einer Person, welche die Computermaus handhabt, wobei das Tastelement zwischen einer Ruhestellung, in welcher ein dem Tastelement zugeordneter elektrischer Schalter der Computermaus sich in einen unaktivierten Schaltzustand befindet, und einer Betätigungsstellung, in welcher der dem Tastelement zugeordnete elektrische Schalter sich in einen aktivierten Schaltzustand befindet, verstellbar gelagert ist, und aufweisend
- eine mit dem Gehäuse verbundene Handauflage, die über dem Gehäuse und dem Tastelement angeordnet ist, und die einen ebenen, horizontal verlaufenden ersten Auflageabschnitt aufweist, der zum Ablegen der Fingerabschnitte im Handbereich der proximalen Phalangen ausgebildet ist und die einen ebenen, in Richtung des Tastelements abschüssig ausgerichteten zweiten Auflageabschnitt aufweist, der zum Ablegen der Fingerabschnitte im Handbereich der Mittelhandknochen ausgebildet ist.

Die allgemein bekannten Computermäuse weisen mehrere Steuerungsfunktionen auf. Die grundlegende Steuerungsfunktion ist die Erfassung einer Bewegung der Computermaus relativ zu einer Oberfläche auf der die Computermaus aufgelegt ist. Die erfasste Bewegung der Computermaus wird auf eine korrelierte Bewegung eines Mauszeigers auf einem Display oder Monitor eines Computers übertragen, wenn die Computermaus an den Computer angeschlossen ist. Zur Erfassung der Bewegung der Computermaus relativ zu der Oberfläche weist eine Computermaus einen Sensor auf. In der Vergangenheit kamen überwiegend mechanisch-elektrische Sensoren zum Einsatz, die eine auf der Oberfläche abrollende Mauskugel und zwei rechtwinkelig zueinander ausgerichtete Inkremental-Drehgeber verwendet, welche die Drehbewegung der Mauskugel in zwei zueinander orthogonalen Drehrichtungen erfassten. Seit längerem werden jedoch fast ausschließlich nur noch optische Sensoren verwendet, welche die Struktur der Oberfläche optisch erfassen und mittels elektronischer Bildauswertung die Bewegung der Computermaus relativ zur Oberfläche bestimmen.

Neben der grundlegenden Steuerungsfunktion der Bewegungserfassung umfasst eine übliche Computermaus außerdem zwei separate Eingabetasten, die auch als linke Maustaste und rechte Maustaste bezeichnet werden. Durch manuelles Betätigen der jeweiligen Maustaste wird ein Signal erzeugt, das je nach Konfiguration bzw. Programmstruktur in dem angeschlossenen Computer unterschiedliche Aktionen auslösen kann.

Ergänzend verfügen übliche Computermäuse noch über die Steuerungsfunktion eines sogenannten Scrollrades. Mittels des Scrollrades kann beispielsweise der Bildlauf oder ein Schiebbalken angesteuert werden.

All diese Funktionalitäten werden bei einer üblichen Computermaus überwiegend oder sogar ausschließlich durch eine gezielte feinmotorische Bewegung eines Fingers der Hand eines Benutzers manuell angesteuert. Die meisten handelsüblichen Computermäuse sind daher nicht geeignet für Menschen mit eingeschränkter oder nicht mehr vorhandener Fingerbeweglichkeit, wie beispielsweise Personen mit Tetraplegie.

Die vorliegende Erfindung schlägt daher eine Computermaus vor, die eine ganz spezielle Handauflage aufweist, die derart ausgebildet ist, dass ein oder mehrere der üblichen Steuerungsfunktionen einer Computermaus auch von Personen mit eingeschränkter oder nicht mehr vorhandener Fingerbeweglichkeit zuverlässig und ermüdungsfrei manuell ausgeführt werden können, um entsprechende Eingaben an einem Computer tätigen zu können. Die erfindungsgemäße Computermaus kann sogar dann noch uneingeschränkt gehandhabt werden, wenn ein oder mehrere Finger der Hand fehlen.

Die erfindungsgemäße Handauflage ist mit dem Gehäuse der Computermaus verbunden und ist über dem Gehäuse und wenigstens einem Tastelement der Computermaus angeordnet. Die erfindungsgemäße Handauflage weist einen ebenen, horizontal verlaufenden ersten Auflageabschnitt auf, der zum Ablegen der Fingerabschnitte im Handbereich der proximalen Phalangen ausgebildet ist und weist einen ebenen, in Richtung des Tastelements abschüssig ausgerichteten zweiten Auflageabschnitt auf, der zum Ablegen der Fingerabschnitte im Handbereich der Mittelhandknochen ausgebildet ist.

Der horizontal verlaufende erste Auflageabschnitt dient dabei vorrangig dazu, die Hand ermüdungsfrei auf die Computermaus auflegen zu können. Der größte Teil des Eigengewichts der Hand liegt somit auf dem horizontal verlaufenden ersten Auflageabschnitt auf, indem dort die Fingerabschnitte im Handbereich der proximalen Phalangen abgelegt werden. Der in Richtung des Tastelements abschüssig ausgerichtete zweite Auflageabschnitt schließt sich an das rückwärtige Ende des horizontal verlaufenden ersten Auflageabschnitts an. Das rückwärtige Ende des horizontal verlaufenden ersten Auflageabschnitts bestimmt sich dabei durch diejenige Richtung, welche bei einem auf die Computermaus aufgelegten Zustand der Hand von den Fingerspitzen ausgehend in Richtung des Handballens bzw. in Richtung der Handwurzel verläuft, also an der Computermaus nach hinten verläuft. Demgemäß bestimmt sich das vorgelagerte Ende des horizontal verlaufenden ersten Auflageabschnitts durch diejenige Richtung, welche bei einem auf die Computermaus aufgelegten Zustand der Hand von dem Handballen ausgehend, bzw. von der Handwurzel ausgehend in Richtung der Fingerspitzen verläuft, also an der Computermaus nach vorne verläuft.

Der in Richtung des Tastelements abschüssig ausgerichtete zweite Auflageabschnitt dient dabei vorrangig dazu, die Fingerabschnitte im Handbereich der Mittelhandknochen dynamisch zu stützen, so dass der Handballen mit geringem Kraftaufwand angehoben oder abgesenkt werden kann. Der Handballen ist dabei frei oberhalb des Tastelements positioniert, wenn die Hand auf der Handauflage aufliegt, so dass durch ein Absenken des Handballens das Tastelement durch den Handballen betätigt werden kann. Eine solche Bewegung erfolgt dabei zumindest überwiegend oder vollständig aus dem Handgelenk heraus und nicht aufgrund einer Bewegung der Finger im Bereich der distalen, intermedialen und/oder proximalen Phalangen.

Die erfindungsgemäße Ausbildung der Handauflage mit einem horizontal verlaufenden ersten Auflageabschnitt und einem in Richtung des Tastelements abschüssig ausgerichteten zweiten Auflageabschnitt ermöglicht eine Steuerung der Computermaus insbesondere ohne die Erfordernis einer Greiffunktionsfähigkeit der Finger im Bereich der distalen, intermedialen und/oder proximalen Phalangen. Aus dem Stand der Technik bereits bekannte Griffstangen mit kreisförmigem Querschnitt haben hingegen den Nachteil, dass weiterhin eine Greiffunktionsfähigkeit der Finger im Bereich der distalen, intermedialen und/oder proximalen Phalangen benötigt wird, um die Griffstange fassen zu können, oder bei nicht vorhandener Greiffunktion eine steife, geschlossene Hand eine notwendige Voraussetzung ist.

Das Merkmal wonach der horizontal verlaufende erste Auflageabschnitt und der in Richtung des Tastelements abschüssig ausgerichtete zweite Auflageabschnitt eben ausgebildet sind, ist dahingehend zu verstehen, dass der erste Auflageabschnitt und der zweite Auflageabschnitt lediglich so gestaltet sein müssen, dass die Hand von oben zuführend darauf aufgelegt werden kann und beispielsweise nicht umgriffen werden muss. Der horizontal verlaufende erste Auflageabschnitt und der in Richtung des Tastelements abschüssig ausgerichtete zweite Auflageabschnitt können demgemäß durchaus in geringfügig abgewandelten Ausführungsformen leicht konkav gewölbt oder konkav gebogen ausgebildet sein, ohne vom erfindungsgemäßen Konzept abzuweichen.

Der horizontal verlaufende erste Auflageabschnitt und/oder der in Richtung des Tastelements abschüssig ausgerichtete zweite Auflageabschnitt kann gegebenenfalls mit einer die Haftung erhöhenden, rutschhemmenden Auflage oder mit einer die Haftung erhöhenden, rutschhemmenden Oberflächenstruktur, wie beispielsweise Noppen oder Rillen versehen sein.

Die Handauflage kann in der erfindungsgemäßen Ausbildung Teil einer von einem Hersteller von Computermäusen entwickelten Version einer speziellen Computermaus sein. Alternativ dazu kann die Handauflage und ein dazu passendes Gehäuse separat hergestellt sein und mit den funktionalen Komponenten einer serienmäßigen Computermaus kombiniert werden. Zur Herstellung einer erfindungsgemäßen Computermaus kann demgemäß eine im Handel erhältliche nach dem Stand der Technik konzipierte Computermaus herangezogen werden und unter deren Anpassung mit einer erfindungsgemäßen Handauflage und einem dazu passenden Gehäuse kombiniert werden.

So kann die Handauflage und das Gehäuse einer erfindungsgemä-ßen Computermaus beispielsweise im Rapid Prototyping Verfahren, insbesondere in einem additiven Fertigungsverfahren, wie beispielsweise dem Fused Layer Modelling (FLM) oder dem Binder Jetting (3D-Drucken) hergestellt werden.

Das Gehäuse kann ein formschlüssig wirkendes Verbindungsmittel aufweisen, durch das eine Bodenplatte einer handelsüblichen Computermaus mit dem Gehäuse verbunden werden kann. Dabei kann vorgesehen sein, dass eine Gehäusehaube der handelsüblichen Computermaus zuvor entfernt und nicht mehr weiterverwendet wird. Statt der bisherigen Schalter für den rechten Mausklick und den linken Mausklick sowie statt des bisherigen Scrollrades, die nicht mehr weiterverwendet werden, kann ein separater elektrischer Schalter bzw. Taster, wie beispielsweise ein Mikroschalter vorgesehen sein, das an einer Aufnahme an dem Gehäuse angebracht sein kann.

Das Gehäuse kann als formschlüssig wirkendes Verbindungsmittel eine an die Außenkontur der Bodenplatte einer handelsüblichen Computermaus in seiner Gestalt angepasste Nut aufweisen, in welche ein Randabschnitt der Bodenplatte im eingebauten Zustand formschlüssig aufgenommen sein kann. Die Nut kann von zwei aufeinander liegenden Rahmenteilen des Gehäuses gebildet werden, wobei ein untere Rahmenteil einen an die Außenkontur der Bodenplatte der handelsüblichen Computermaus angepassten ersten Fensterausschnitt aufweisen kann, dessen Ausschnittsrand mit einer nach oben auf das obere Rahmenteil zuweisenden ersten Fase versehen ist, und ein oberer Rahmenteil, der auf den unteren Rahmenteil aufgelegt wird, ebenfalls einen an die Außenkontur der Bodenplatte der handelsüblichen Computermaus angepassten zweiten Fensterausschnitt aufweist, dessen Ausschnittsrand allerdings mit einer nach unten auf das untere Rahmenteil zuweisenden zweiten Fase versehen ist. In einem Zusammengefügten Zustand des unteren Rahmenteils und oberen Rahmenteils wird der umlaufende Randbereich der Bodenplatte der handelsüblichen Computermaus formschlüssig eingefasst.

Das obere Rahmenteil kann lediglich über einen Umfangswinkel von maximal 180 Grad sich erstreckend ausgebildet sein, d.h. in einer solchen Ausführungsvariante lediglich einen randoffenen zweiten Fensterausschnitt aufweisen, so dass in einem zusammengefügten Zustand des unteren Rahmenteils und des oberen Rahmenteils die Bodenplatte der handelsüblichen Computermaus seitlich eingeschoben bzw. bei Bedarf auch wieder herausgezogen werden kann.

Das Gehäuse der erfindungsgemäßen Computermaus kann neben dem unteren Rahmenteil und dem oberen Rahmenteil ergänzend einen Gehäusedeckel aufweisen, der mit dem unteren und dem oberen Rahmenteil zusammengefügt werden kann und die Bodenplatte der handelsüblichen Computermaus gemeinsam mit den elektronischen Komponenten der handelsüblichen Computermaus einschließt.

Im Falle der Ausführungsvariante mit einem oberen Rahmenteil, das lediglich über einen Umfangswinkel von maximal 180 Grad sich erstreckend ausgebildet ist, d.h. einen randoffenen zweiten Fensterausschnitt aufweist, so dass in einem zusammengefügten Zustand des unteren Rahmenteils und des oberen Rahmenteils die Bodenplatte der handelsüblichen Computermaus seitlich eingeschoben bzw. bei Bedarf auch wieder herausgezogen werden kann, kann der Gehäusedeckel wenigstens einen entsprechenden Gehäusevorsprung aufweisen, welcher im Zusammengebauten Zustand das obere Rahmenteil entsprechend ergänzt, um einen erweiterten zweiten Fensterausschnitt zu schaffen, der sich um mehr als 180 Grad über den Umfang der Bodenplatte der handelsüblichen Computermaus erstreckt, wenn der Gehäusedeckel auf das obere und untere Rahmenteil aufgesetzt ist.

Im Bereich der rückwärtigen Hälfte der erfindungsgemäßen Computermaus ist oberhalb des Gehäusedeckels, also an der Oberseite des Gehäuses, das Tastelement angeordnet. Das Tastelement kann von einer beweglichen, insbesondere federelastischen Zunge gebildet werden, die in ihrer entspannten Ruhestellung sich in einem Abstand von der Oberseite des Gehäusedeckels bzw. des Gehäuses befindet. Die federelastische Zunge kann durch Drücken mittels des Handballens der Hand, die auf der Handauflage der erfindungsgemäßen Computermaus abgelegt ist, nach unten bewegt werden und in dieser unteren Betätigungsstellung den elektrischen Schalter der erfindungsgemäßen Computermaus betätigen, so dass dieser in seinen aktivierten Schaltzustand gebracht wird. Das Tastelement kann sich über die gesamte Breite des Gehäusedeckels bzw. des Gehäuses erstrecken.

Das Tastelement kann gegebenenfalls mit einer handballenschonenden Auflage, wie beispielsweise einer elastischen Schicht oder mit einer handballenschonenden Oberflächenstruktur versehen sein.

Die Handauflage kann einen dem ebenen, horizontal verlaufenden ersten Auflageabschnitt vorgelagerten vertikalen Stirnwandabschnitt aufweisen, der zum Anlegen der Fingerabschnitte im Handbereich der intermedialen und/oder distalen Phalangen ausgebildet ist.

Der vorgelagerte vertikale Stirnwandabschnitt dient dabei nicht zum Greifen oder Führen der Handauflage, sondern lediglich als eine Anlagefläche, so dass die Fingerabschnitte im Handbereich der intermedialen und/oder distalen Phalangen daran ruhen können. Ein optionaler Hinterschnitt unterhalb dem vertikalen Stirnwandabschnitt kann insbesondere dann zweckmä-ßig sein, wenn die Fingerabschnitte im Handbereich der intermedialen und/oder distalen Phalangen an der Hand vorhanden sind, aber gegebenenfalls aufgrund einer Spastik in einer gekrümmten Stellung verharren und demgemäß gar nicht oder nur unter Schmerzen gestreckt werden können.

Der ebene, in Richtung des Tastelements abschüssig ausgerichtete zweite Auflageabschnitt kann in einem Winkel relativ zur horizontalen Ausrichtung des ersten Auflageabschnitts derart ausgerichtet angeordnet sein, dass sich die schräge Ebene, in welcher der zweite Auflageabschnitt liegt mit der Ebene des Tastelements in einem mittleren Bereich der Fläche des Tastelements schneidet.

Der in Richtung des Tastelements abschüssig ausgerichtete zweite Auflageabschnitt kann beispielsweise einen Winkel von 45 Grad bezüglich der horizontalen Ausrichtung des ersten Auflageabschnitts aufweisen. Der in Richtung des Tastelements abschüssig ausgerichtete zweite Auflageabschnitt kann sich über die gesamte Breite oder zumindest annähernd die gesamte Breite der Computermaus bzw. des Gehäuses der Computermaus erstrecken. Die in Richtung des Gefälles des zweiten Auflageabschnitts laufende Tiefe des zweiten Auflageabschnitts kann derart bemessen sein, dass der zweite Auflageabschnitt die vordere Flächenhälfte der Handfläche einer Hand abdeckt, wenn eine Person die Hand auf der Handauflage abgelegt hat. Die hintere Flächenhälfte der Handfläche einer Hand kann dann sozusagen "in der Luft hängen", wobei die Fläche des Tastelements dabei unterhalb der hinteren Flächenhälfte der Handfläche liegt. Je nach erforderlicher Schaltkraft für das Betätigen des Tastelements kann es auch vorgesehen sein, dass die hintere Flächenhälfte der Handfläche dauerhaft auf der Fläche des Tastelements aufliegen kann und bei einem entspannten Ablegen der Hand das Tastelement nicht in seine Betätigungsstellung bewegt wird, sondern eine deutlich höhere Kraft erforderlich ist, um das Tastelement in seine Betätigungsstellung zu bewegen. Dazu kann die Federkraft, welche das Tastelement in seine Ruhestellung vorspannt, entsprechend hoch eingestellt sein. Zum Aktivieren des elektrischen Schalters kann das Tastelement durch eine Druckbewegung aus dem Arm heraus oder zumindest aus dem Bereich des Handgelenks heraus in seine Betätigungsstellung gedrückt werden.

An einem linkseitigen Rand des ersten Auflageabschnitts und/oder des zweiten Auflageabschnitts kann eine sich vom linkseitigen Rand vertikal nach oben erstreckende erste Wange ausgebildet sein und an einem rechtsseitigen Rand des ersten Auflageabschnitts und/oder des zweiten Auflageabschnitts kann eine sich vom rechtsseitigen Rand vertikal nach oben erstreckende zweite Wange ausgebildet sein.

Die erste Wange und die zweite Wange begrenzen dabei den Auflagebereich der Handauflage von zwei gegenüberliegenden Seiten. Zwischen der ersten Wange und der zweiten Wange kann somit die Hand eingelegt werden und erhält durch die erste Wange und die zweite Wange eine stützende Führung gegen seitliches Abrutschen. Darüber hinaus erleichtern die erste Wange und die zweite Wange ein seitliches Verschieben der Computermaus auf der Oberfläche nach links und rechts.

Die Handauflage kann mittels eines am Gehäuse gelagerten Bügels über dem Gehäuse und dem Tastelement angeordnet sein, auf dessen Bügeloberseite die Handauflage befestigt oder gelagert ist.

Der Bügel hält die Handauflage in einem Abstand zu der Oberseite des Gehäuses. Darüber hinaus hält der Bügel die Handauflage in einem Abstand zu dem Tastelement. Der Bügel kann lösbar an dem Gehäuse der Computermaus befestigt sein. Für eine lösbare Befestigung des Bügels an dem Gehäuse können Befestigungsmittel, wie beispielsweise Schrauben oder Rastelemente vorgesehen sein, mit denen der Bügel manuell oder allenfalls unter Zuhilfenahme von gängigen Handwerkzeugen, wie beispielsweise Schraubendreher, zerstörungsfrei gelöst werden können. So kann beispielsweise eine erste Ausführungsform eines Bügels durch eine anders gestaltete Ausführungsform eines Bügels ersetzt werden.

Die Handauflage kann um eine vertikale erste Drehachse und/oder eine horizontale zweite Drehachse schwenkbar an der Bügeloberseite des Bügels gelagert sein.

Eine jeweilige schwenkbare Lagerung der Handauflage an dem Bügel kann dazu genutzt werden, die Handauflage nach individuellen Bedürfnissen der nutzenden Person in unterschiedlichen Orientierungen einstellen zu können. Die jeweilige eingestellte Orientierung um die vertikale erste Drehachse und/oder um die horizontale zweite Drehachse kann dazu arretierbar ausgebildet sein.

Falls die Handauflage zusammen mit dem Bügel als ein einteiliges Bauteil oder als ein kombiniertes Verbundbauteil hergestellt ist, kann eine individuelle Orientierung der Handauflage um die vertikale erste Drehachse und/oder um die horizontale zweite Drehachse bezüglich des Bügels auch bei der Herstellung der Computermaus berücksichtigt sein. In diesem Fall ist die Computermaus sozusagen maßgeschneidert auf eine bestimmte Person abgestimmt und bei der späteren Verwendung dann nicht mehr schwenkbar.

Der Bügel kann in einer horizontalen Ebene verstellbar an dem Gehäuse gelagert sein.

Der Bügel kann in einer speziellen Weiterbildung demgemäß auch linear verstellbar an dem Gehäuse gelagert sein. Eine linear verstellbare Lagerung kann derart ausgebildet sein, dass der Bügel relativ zur Oberfläche des Gehäuses und/oder relativ zum Tastelement wahlweise nach vorne oder nach hinten verstellt werden kann. Die lineare Verstellbarkeit kann mittels einer Schienenlagerung realisiert werden. So kann die Schienenlagerung beispielsweise zwei gegenüberliegende Nuten umfassen, wobei in jeder Nut eine von zwei Federkörpern linear verstellbar geführt sein kann. In einer ersten Variante können die beiden Nuten an gegenüberliegenden Seiten des Gehäuses ausgebildet sein und die beiden Federkörper können an den beiden gegenüberliegenden Enden des Bügels ausgebildet sein. In einer abgewandelten zweiten Variante können die beiden Federkörper an gegenüberliegenden Seiten des Gehäuses ausgebildet sein und die beiden Nuten können an den beiden gegenüberliegenden Enden des Bügels ausgebildet sein. Jeweils ein Federkörper greift dabei verschiebbar, im Übrigen aber formschlüssig in jeweils eine Nut ein.

Die Verstellbarkeit des Bügels kann stufenlos sein. Alternativ kann die Verstellbarkeit des Bügels in Stufen erfolgen. Dazu können wenigstens an einer Seite des Gehäuses oder an beiden gegenüberliegenden Seiten des Gehäuses Rastelemente ausgebildet sein und an einem oder den beiden gegenüberliegenden Enden des Bügels kann wenigstens ein zu den Rastelementen des Gehäuses korrespondierende Gegenrastelemente ausgebildet sein. In einer ersten Version können die Rastelemente beispielsweise von mehreren, in einer Reihe beabstandet angeordneten Vertiefungen in der Seitenwand des Gehäuses gebildet werden und die Gegenrastelemente können von Vorsprüngen an dem Bügel gebildet werden, die in einer jeweiligen Position in eine der mehreren Vertiefungen einrastet. In einer zweiten Version können die Rastelemente beispielsweise von mehreren, in einer Reihe beabstandet angeordneten Vorsprüngen in der Seitenwand des Gehäuses gebildet werden und die Gegenrastelemente können von an dem Bügel angeordneten Vertiefungen gebildet werden, in die in einer jeweiligen Position ein jeweiliger Vorsprung des Gehäuses einrastet.

Durch eine lineare Verstellbarkeit des Bügels kann die Handauflage je nach körperlichen Gegebenheiten der nutzenden Person individuell eingestellt werden und insbesondere die Position der Handlauflage bezüglich des Tastelements eingestellt werden.

Eine weitere Aufgabe der Erfindung ist es, ein Computer-Eingabegerätesystem zu schaffen, das auch von Personen mit eingeschränkter oder nicht mehr vorhandener Fingerbeweglichkeit zuverlässig und ermüdungsfrei manuell gesteuert werden kann, um Eingaben an einem Computer tätigen zu können.

Die Erfindung umfasst demgemäß auch ein Computer-Eingabegerätesystem, aufweisend eine Computermaus nach einem der beschriebenen Ausführungsformen als ein erstes Eingabegerät und ein vom ersten Eingabegerät mechanisch separates zweites Eingabegerät, das ein ortsfest aufzustellendes zweites Gehäuse aufweist, das eine Seitenwand aufweist, an der eine Betätigungseinrichtung angeordnet ist, der ein zweiter elektrischer Schalter des zweiten Eingabegeräts und ein dritter elektrischer Schalter des zweiten Eingabegeräts zugeordnet ist, und eine obere Handauflegewand aufweist, die einen Ausschnitt aufweist, aus dem eine um eine horizontale Drehachse in dem zweiten Gehäuse drehbare gelagerte Walze mit ihrer Walzenmantelwand teilweise nach oben herausragt, wobei die Walze eine Walzenbreite aufweist, die sich über wenigstens die Hälfte der Breite der oberen Handauflegewand erstreckt.

Über das erste Eingabegerät kann demgemäß die grundlegende Steuerungsfunktion der Erfassung einer Bewegung der Computermaus relativ zu einer Oberfläche auf der die Computermaus aufgelegt ist, zur Steuerung eines Cursors am Bildschirm eines Computers erfüllt werden sowie die Steuerungsfunktion einer Eingabetaste, beispielsweise konfiguriert als eine linke Maustaste oder ein rechte Maustaste.

Das Computer-Eingabegerätesystem kann demgemäß den Computer umfassen, an den sowohl das erste Eingabegerät als auch das zweite Eingabegerät angeschlossen und installiert bzw. konfiguriert ist.

Über das zweite Eingabegerät können zusätzliche Steuerungsfunktionen bereitgestellt werden. So kann mittels des zweiten Eingabegeräts die weitere Steuerungsfunktion eines Scrollrades bereitgestellt werden und optional ein zweite und/oder eine dritte Eingabetaste, beispielsweise konfiguriert als die linke Maustaste und/oder die rechte Maustaste bzw. als eine dritte Maustaste, die so konfiguriert sein kann, dass sie der Schaltfunktion eines Scrollrades einer handelsüblichen Computermaus entspricht.

Entgegen der bekannten Bauweise wird bei dem zweiten Eingabegerät des erfindungsgemäßen Computer-Eingabegerätesystems die Funktion des Scrollrades nicht durch ein schmales Rad verwirklicht, sondern durch eine breite Walze.

Indem die Walze eine Walzenbreite aufweist, die sich über wenigstens die Hälfte der Breite der oberen Handauflegewand erstreckt, kann die Steuerungsfunktion des Scrollens auch von Personen mit eingeschränkter oder nicht mehr vorhandener Fingerbeweglichkeit zuverlässig und ermüdungsfrei manuell gesteuert werden. Die Walze wird demgemäß nicht durch Finger bewegt, sondern beispielsweise durch die Handkante der Hand einer Person. Die Walze kann demgemäß eine Mindestbreite aufweisen, die einer Dicke einer Hand bzw. einer Breite einer Handkante der Hand entspricht.

Ein Scrollrad, das in bekannter Weise schmal gestaltet ist, ist ungeeignet zur Betätigung mittels einer Handkante der Hand, da die Handkante derart elastisch bzw. weich ist, dass aufgrund der schmalen Gestaltung des bekannten Scrollrad, die Handkante beim Auflegen sich um das Scrollrad herum legt und dann teilweise auf der Handauflegewand aufliegt. Liegt die Handkante dabei auf der Handauflegewand auf, kann die Hand nicht mehr ohne weiteres verschoben werden, um das Scrollrad in zuverlässiger, kontrollierter Weise drehen zu können. Ist das Scrollrad jedoch in Art einer breiten Walze ausgebildet, wie dies erfindungsgemäß vorgesehen sein kann, so ruht die gesamte Handkante auf der Mantelwand der Walze und nicht mehr auf der Handauflegewand. So kann die Walze in zuverlässiger und kontrollierter Weise mittels der Handkante einer Hand gedreht werden.

Bei dem Computer-Eingabegerätesystem können das erste Eingabegerät und das zweite Eingabegerät in ihren an einem gemeinsamen Computer angeschlossenen Zustand derart konfiguriert sein, dass die Funktion der Steuerung des Mauszeigers mittels des ersten Eingabegerätes möglich ist und die Funktionen eines linken Mausklicks, eines rechten Mausklicks und einer Scroll-Funktion mittels des zweiten Eingabegerätes möglich ist.

In einer solchen Variante kann demgemäß vorgesehen sein, dass die Schaltfunktion des Tastelements des erste Eingabegeräts nicht genutzt wird oder für eine andere Steuerungsfunktionalität genutzt wird.

Bei dem Computer-Eingabegerätesystem können das erste Eingabegerät und das zweite Eingabegerät in ihren an einem gemeinsamen Computer angeschlossenen Zustand derart konfiguriert sein, dass die Funktion der Steuerung des Mauszeigers mittels der erfindungsgemäßen Computermaus, d.h. dem ersten Eingabegerät möglich ist sowie die Funktion entweder eines linken Mausklicks oder eines rechten Mausklicks mittels des Tastelements der erfindungsgemäßen Computermaus, d.h. dem ersten Eingabegerät möglich ist und eine Scroll-Funktion mittels des zweiten Eingabegerätes möglich ist.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine perspektivische Darstellung einer beispielhaften Ausführungsform einer erfindungsgemäßen Computermaus,
- Fig. 2: eine Darstellung der beispielhaften erfindungsgemäßen Computermaus gemäß Fig.1 in einem Längsschnitt,
- Fig. 3: eine Darstellung der beispielhaften erfindungsgemäßen Computermaus gemäß Fig.1 in einem Seitenansicht,
- Fig. 4: eine perspektivische Ansicht des Bügels und der Handauflage der erfindungsgemä-ßen Computermaus in einer separaten Darstellung getrennt vom Gehäuse,
- Fig. 5: eine perspektivische Darstellung der erfindungsgemäßen Computermaus mit aufgelegter Hand,
- Fig. 6: eine perspektivische Darstellung eines Unterteils des Gehäuses der
- Fig. 7: erfindungsgemäßen Computermaus mit einem eingesetzten Bodenplatte einer handelsüblichen Computermaus, eine geschnittene perspektivische Darstellung des Unterteils des Gehäuses gemäß Fig. 6 bei herausgenommener Bodenplatte einer handelsüblichen Computermaus,
- Fig. 8: eine schematische Darstellung eines beispielhaften erfindungsgemäßen Computer-Eingabegerätesystems mit einer Computertastatur sowie einem ersten Eingabegerät und einem zweiten Eingabegerät,

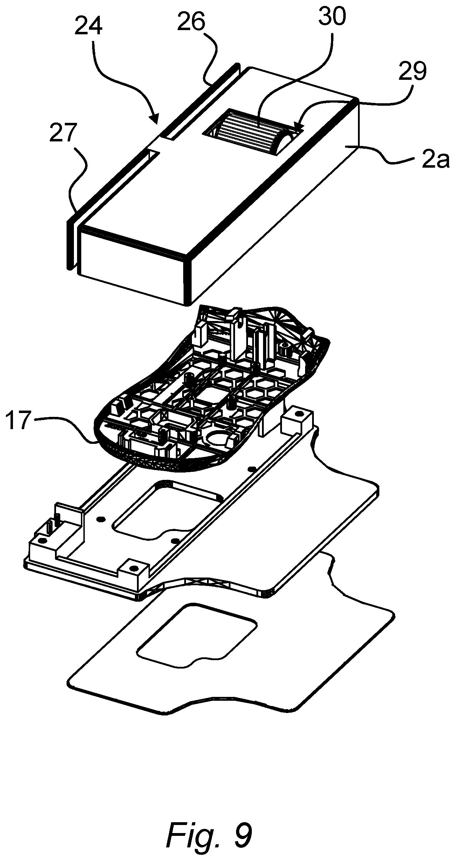

- Fig. 9: eine perspektivische Explosionsdarstellung des zweiten Eingabegeräts eines Computer-Eingabegerätesystems gemäß Fig. 8, und

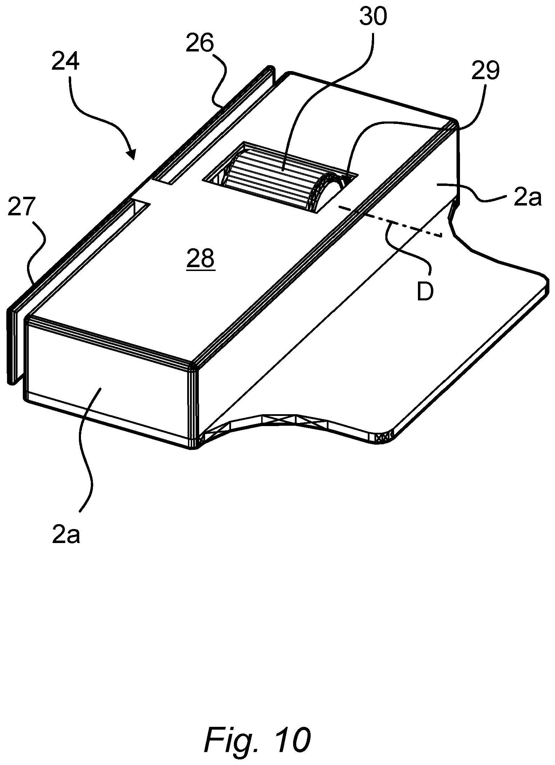

- Fig. 10: eine perspektivische Darstellung des zweiten Eingabegeräts eines Computer-Eingabegerätesystems gemäß Fig. 8 im Zusammenbau.

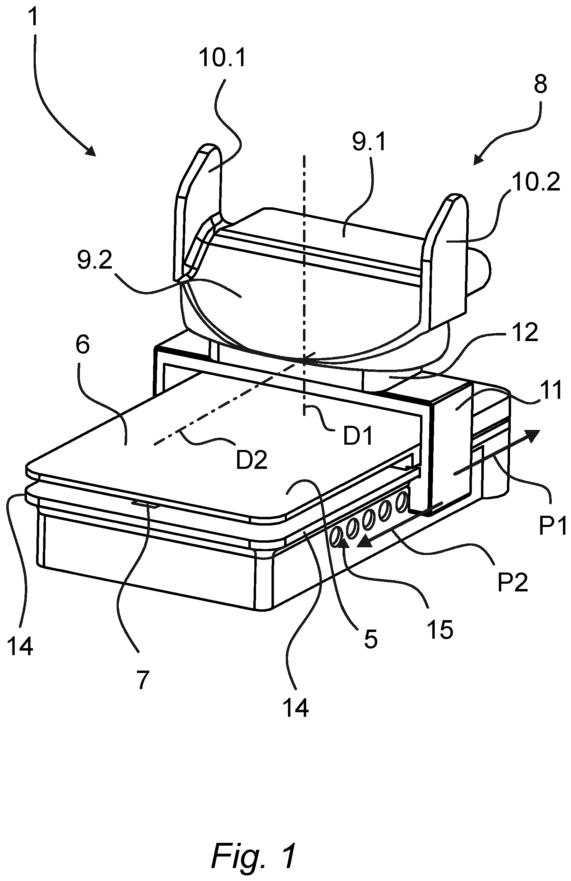

In der Fig. 1 ist eine beispielhafte Ausführungsform einer erfindungsgemäßen Computermaus 1 dargestellt.

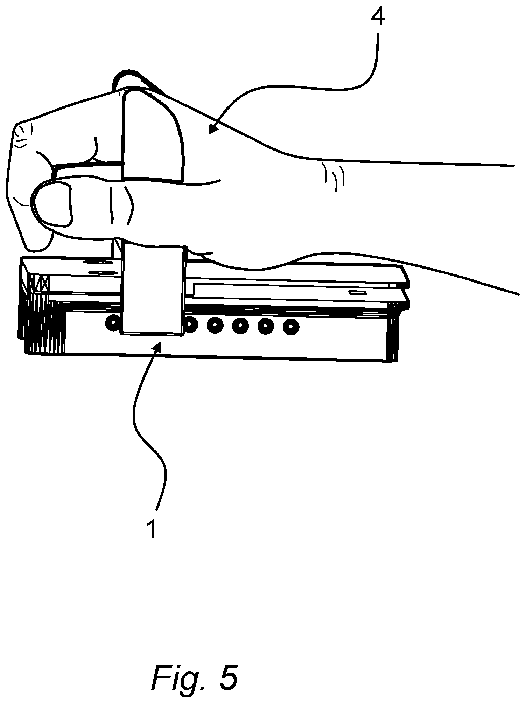

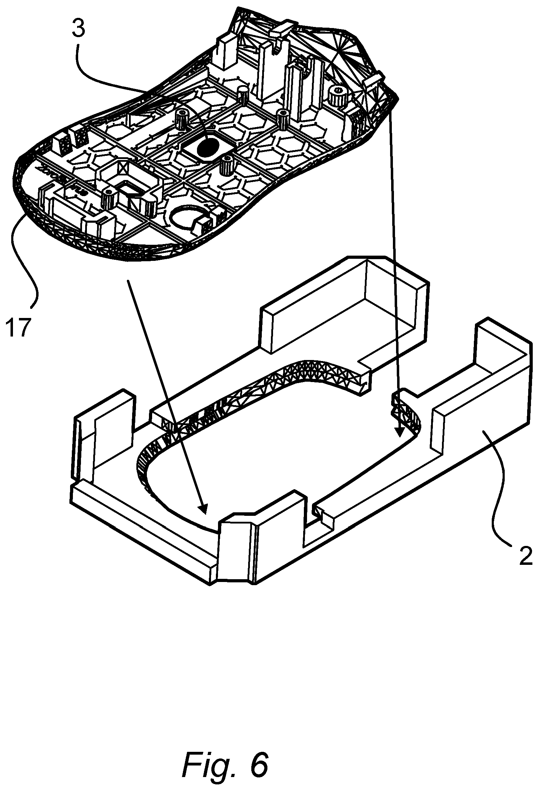

Die Computermaus 1 umfasst ein Gehäuse 2 und einen im Gehäuse 2 angeordneter Sensor 3 (Fig. 6), der ausgebildet ist zur Erfassung einer Bewegung der Computermaus 1 relativ zu einer Oberfläche, auf der die Computermaus 1 aufgelegt ist und auf der sich die Computermaus 1 durch manuelles Verstellen mittels der Hand 4 (Fig. 5) einer Person bewegen kann.

Die Computermaus 1 umfasst außerdem ein an der Oberseite 5 des Gehäuses 2 angeordnetes Tastelement 6, das ausgebildet ist zu seiner Betätigung mittels eines Handballens einer Hand 4 einer Person, welche die Computermaus 1 handhabt, wobei das Tastelement 6 zwischen einer Ruhestellung, in welcher ein dem Tastelement 6 zugeordneter elektrischer Schalter 7 der Computermaus 1 sich in einen unaktivierten Schaltzustand befindet, und einer Betätigungsstellung, in welcher der dem Tastelement 6 zugeordnete elektrische Schalter 7 sich in einen aktivierten Schaltzustand befindet, verstellbar gelagert ist.

Die Computermaus 1 weist darüber hinaus eine mit dem Gehäuse 2 verbundene Handauflage 8 auf, die über dem Gehäuse 2 und dem Tastelement 6 angeordnet ist, und die einen ebenen, horizontal verlaufenden ersten Auflageabschnitt 9.1 aufweist, der zum Ablegen der Fingerabschnitte im Handbereich der proximalen Phalangen ausgebildet ist und die einen ebenen, in Richtung des Tastelements 6 abschüssig ausgerichteten zweiten Auflageabschnitt 9.2 aufweist, der zum Ablegen der Fingerabschnitte im Handbereich der Mittelhandknochen ausgebildet ist.

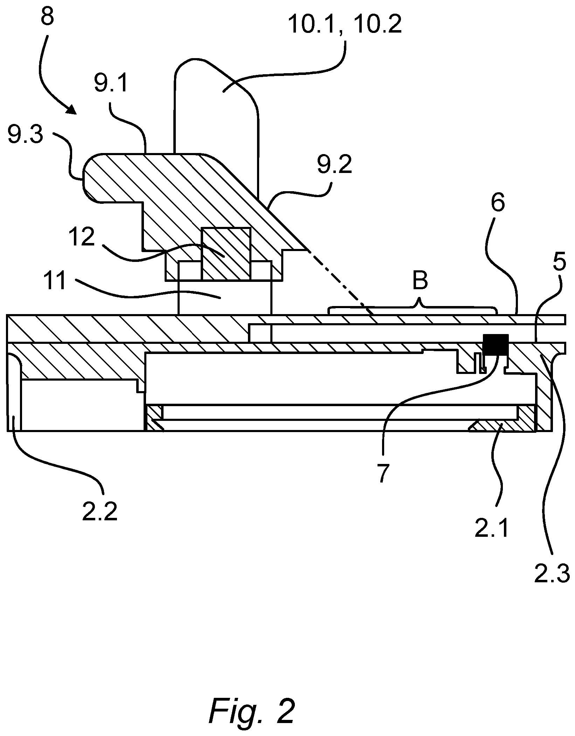

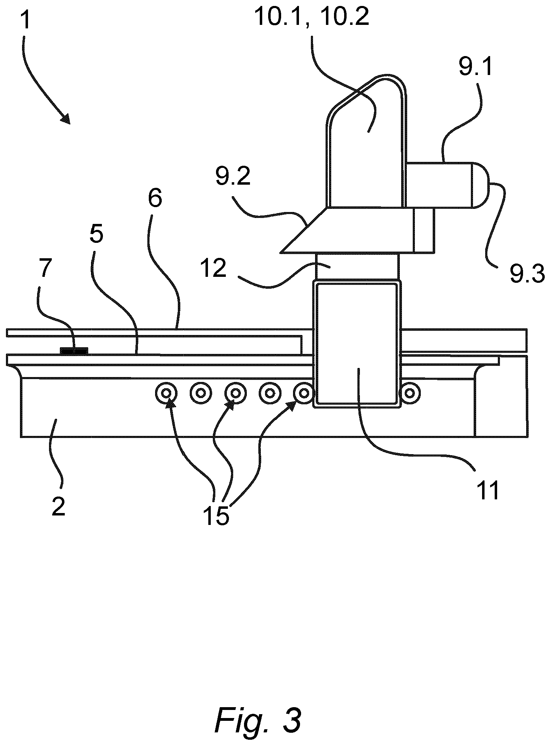

In dem dargestellten Ausführungsbeispiel der Computermaus 1 weist die Handauflage 8 einen dem ebenen, horizontal verlaufenden ersten Auflageabschnitt 9.1 vorgelagerten vertikalen Stirnwandabschnitt 9.3 auf, der zum Anlegen der Fingerabschnitte im Handbereich der intermedialen und/oder distalen Phalangen ausgebildet ist. Der dem ebenen, horizontal verlaufenden ersten Auflageabschnitt 9.1 vorgelagerte vertikale Stirnwandabschnitt 9.3 ist speziell in Fig. 2 und Fig. 3 ersichtlich.

Der ebene, in Richtung des Tastelements 6 abschüssig ausgerichtete zweite Auflageabschnitt 9.2 ist im Falle des vorliegenden Ausführungsbeispiels in einem Winkel relativ zur horizontalen Ausrichtung des ersten Auflageabschnitts 9.1 derart ausgerichtet angeordnet, dass sich die schräge Ebene, in welcher der zweite Auflageabschnitt 9.2 liegt mit der Ebene des Tastelements 6 in einem mittleren Bereich B der Fläche des Tastelements 6 schneidet.

Der in Richtung des Tastelements 6 abschüssig ausgerichtete zweite Auflageabschnitt 9.2 kann beispielsweise einen Winkel von 45 Grad bezüglich der horizontalen Ausrichtung des ersten Auflageabschnitts 9.1 aufweisen.

An einem linkseitigen Rand des ersten Auflageabschnitts 9.1 und/oder des zweiten Auflageabschnitts 9.2 ist optional eine sich vom linkseitigen Rand vertikal nach oben erstreckende erste Wange 10.1 ausgebildet. An einem rechtsseitigen Rand des ersten Auflageabschnitts 9.1 und/oder des zweiten Auflageabschnitts 9.2 ist optional eine sich vom rechtsseitigen Rand vertikal nach oben erstreckende zweite Wange 10.2 ausgebildet.

Die Handauflage 8 ist im Falle des vorliegenden Ausführungsbeispiels mittels eines am Gehäuse 2 gelagerten Bügels 11 über dem Gehäuse 2 und dem Tastelement 6 angeordnet, auf dessen Bügeloberseite die Handauflage 8 befestigt oder gelagert ist.

In einer speziellen optionalen Ausführungsvariante kann die Handauflage 8 mittels einer Lagerung 12 um eine vertikale erste Drehachse D1 und/oder eine horizontale zweite Drehachse D2 schwenkbar an der Bügeloberseite des Bügels 11 gelagert sein.

Der Bügel 11 kann, wie dargestellt, in einer horizontalen Ebene verstellbar an dem Gehäuse 2 gelagert sein.

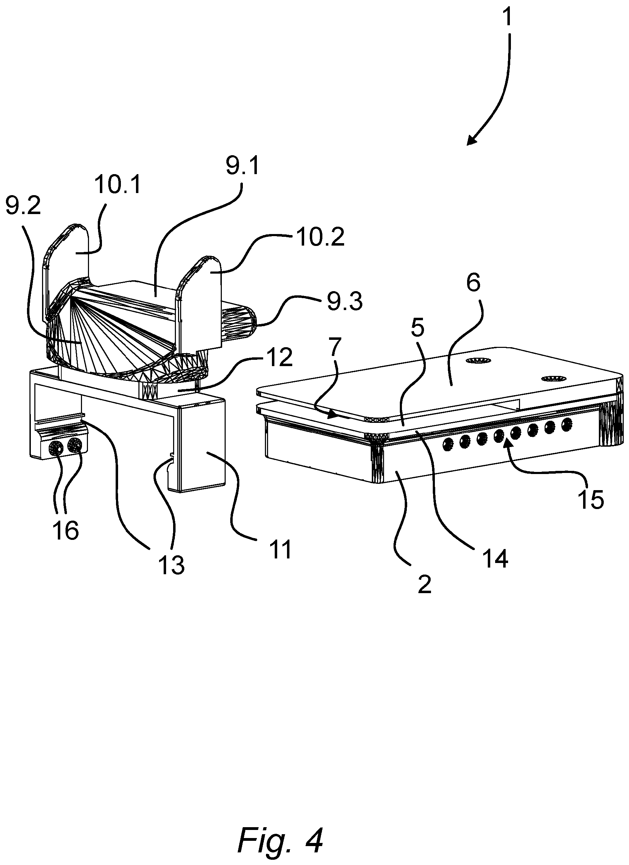

Eine solche linear verstellbare Lagerung kann wie dargestellt derart ausgebildet sein, dass der Bügel 11 relativ zur Oberfläche des Gehäuses 2 und/oder relativ zum Tastelement 6 wahlweise nach vorne in Pfeilrichtung P1 oder nach hinten in Pfeilrichtung P2 verstellt werden kann. Die lineare Verstellbarkeit kann mittels einer Schienenlagerung realisiert werden. So kann die Schienenlagerung beispielsweise zwei gegenüberliegende Nuten 13, beispielsweise an dem Bügel 11, wie dies in Fig. 4 dargestellt ist, umfassen, wobei in jeder Nut 13 eine von zwei leistenförmige Federkörpern 14 linear verstellbar geführt sein kann. In einer nicht dargestellten Variante können die beiden Nuten 13 an gegenüberliegenden Seiten des Gehäuses 2 ausgebildet sein und die beiden leistenförmigen Federkörper 14 können an den beiden gegenüberliegenden Enden des Bügels 11 ausgebildet sein. In der in Fig. 1 bis Fig. 4 gezeigten Variante sind die beiden leistenförmigen Federkörper 14 an gegenüberliegenden Seiten des Gehäuses 2 ausgebildet und die beiden Nuten 13 sind an den beiden gegenüberliegenden Enden des Bügels 11 ausgebildet. Jeweils ein Federkörper 14 greift in jeweils eine Nut 13 ein.

Die Verstellbarkeit des Bügels 11 kann stufenlos sein. In der dargestellten Ausführungsform ist die Verstellbarkeit des Bügels 11 jedoch in Stufen ausgebildet. Dazu sind im Falle des vorliegenden Ausführungsbeispiels wenigstens an einer Seite des Gehäuses 2 oder an beiden gegenüberliegenden Seiten des Gehäuses 2 mehrere Rastelemente 15 ausgebildet und an einem oder den beiden gegenüberliegenden Enden des Bügels 11 ist wenigstens ein zu den Rastelementen 15 des Gehäuses 2 korrespondierende Gegenrastelemente 16 (Fig. 4) ausgebildet. In dieser Version werden die Rastelemente 15 von mehreren, in einer Reihe beabstandet angeordneten Vertiefungen in der Seitenwand des Gehäuses 2 gebildet und die Gegenrastelemente 16 können von Vorsprüngen an dem Bügel 11 gebildet werden, die in einer jeweiligen Position in eine oder zwei der mehreren Vertiefungen einrasten.

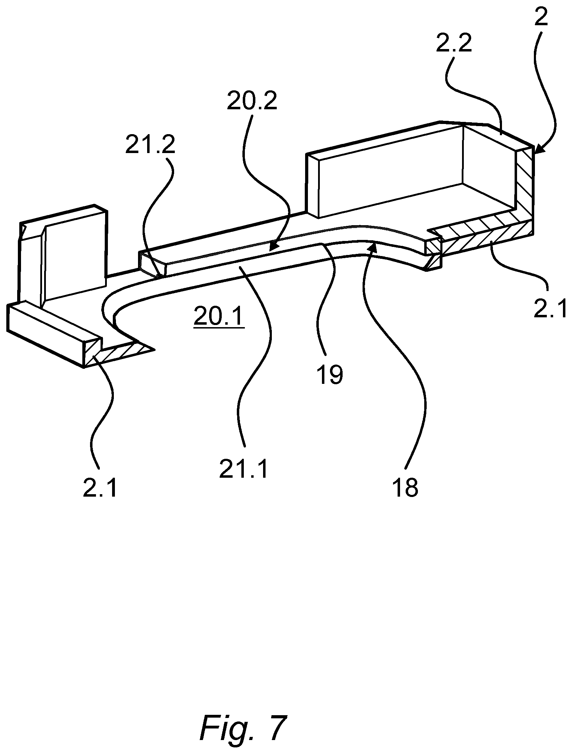

In Fig. 6 und Fig. 7 ist aufgezeigt, wie eine Bodenplatte 17 einer handelsüblichen Computermaus mit dem Gehäuse 2 verbunden werden kann. Dabei kann vorgesehen sein, dass eine Gehäusehaube der handelsüblichen Computermaus zuvor entfernt und nicht mehr weiterverwendet wird.

Wie insbesondere in Fig. 7 dargestellt ist, kann das Gehäuse 2 als ein formschlüssig wirkendes Verbindungsmittel 18 eine an die Außenkontur der Bodenplatte 17 einer handelsüblichen Computermaus in seiner Gestalt angepasste Nut 19 aufweisen, in welche ein Randabschnitt der Bodenplatte 17 im eingebauten Zustand formschlüssig aufgenommen ist. Die Nut 19 wird im Falle des vorliegenden Ausführungsbeispiels von zwei aufeinander liegenden Rahmenteilen 2.1 und 2.2 des Gehäuses 2 gebildet werden, wobei ein unteres Rahmenteil 2.1 einen an die Außenkontur der Bodenplatte 17 der handelsüblichen Computermaus angepassten ersten Fensterausschnitt 20.1 aufweist, dessen Ausschnittsrand mit einer nach oben auf das obere Rahmenteil 2.2 zuweisenden ersten Fase 21.1 versehen ist, und das obere Rahmenteil 2.2, der auf den unteren Rahmenteil 2.1 aufgelegt ist, weist ebenfalls einen an die Außenkontur der Bodenplatte 17 der handelsüblichen Computermaus angepassten zweiten Fensterausschnitt 20.2 auf, dessen Ausschnittsrand allerdings mit einer nach unten auf das untere Rahmenteil 2.1 zuweisenden zweiten Fase 21.2 versehen ist. In einem Zusammengefügten Zustand des unteren Rahmenteils 2.1 und oberen Rahmenteils 2.2 wird der umlaufende Randbereich der Bodenplatte 17 der handelsüblichen Computermaus dadurch formschlüssig eingefasst.

Das obere Rahmenteil 2.2 kann lediglich über einen Umfangswinkel von maximal 180 Grad sich erstreckend ausgebildet sein, d.h. in einer solchen Ausführungsvariante lediglich einen randoffenen zweiten Fensterausschnitt 20.2 aufweisen, so dass in einem zusammengefügten Zustand des unteren Rahmenteils 2.1 und des oberen Rahmenteils 2.2 die Bodenplatte 17 der handelsüblichen Computermaus seitlich eingeschoben bzw. bei Bedarf auch wieder herausgezogen werden kann.

Das Gehäuse der erfindungsgemäßen Computermaus 1 kann neben dem unteren Rahmenteil 2.1 und dem oberen Rahmenteil 2.2 ergänzend einen Gehäusedeckel 2.3 (Fig. 2) aufweisen, der mit dem unteren Rahmenteil 2.1 und dem oberen Rahmenteil 2.2 zusammengefügt werden kann, worin die Bodenplatte 17 der handelsüblichen Computermaus gemeinsam mit den elektronischen Komponenten der handelsüblichen Computermaus eingeschlossen ist.

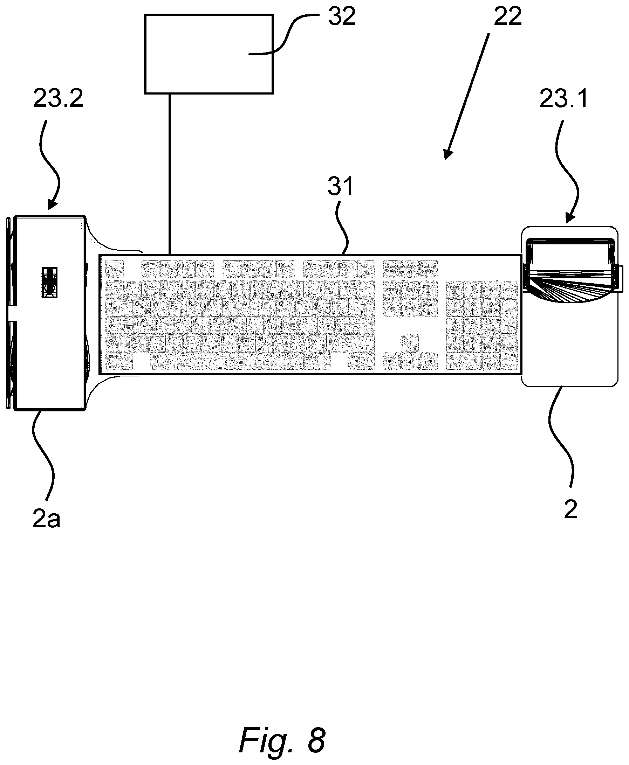

Die Fig. 8 zeigt ein beispielhaftes Computer-Eingabegerätesystem 22, aufweisend eine Computermaus 1 nach einem der beschriebenen Ausführungsformen als ein erstes Eingabegerät 23.1 und ein vom ersten Eingabegerät 23.1 mechanisch separates zweites Eingabegerät 23.2, das ein ortsfest aufzustellendes zweites Gehäuse 2a aufweist, das eine Seitenwand 24 aufweist, an der eine Betätigungseinrichtung 25 angeordnet ist, der ein zweiter elektrischer Schalter 26 des zweiten Eingabegeräts 23.2 und ein dritter elektrischer Schalter 27 des zweiten Eingabegeräts 23.2 zugeordnet ist.

Das erste Eingabegerät 23.1 und das zweite Eingabegerät 23.2 können, wie in Fig. 8 dargestellt ist, rechtsseitig und linksseitig einer Tastatur 31 eines Computers 32 positioniert sein.

Das zweite Eingabegerät 23.2 weist eine obere Handauflegewand 28 auf, die einen Ausschnitt 29 aufweist, aus dem eine um eine horizontale Drehachse D in dem zweiten Gehäuse 2a drehbare gelagerte Walze 30 mit ihrer Walzenmantelwand teilweise nach oben herausragt, wobei die Walze 30 eine Walzenbreite aufweist, die sich über wenigstens die Hälfte der Breite der oberen Handauflegewand 28 erstreckt.

## Patentansprüche

1. Computermaus (1), aufweisend:
- ein Gehäuse (2),
- einen im Gehäuse (2) angeordneten Sensor (3), der ausgebildet ist zur Erfassung einer Bewegung der Computermaus (1) relativ zu einer Oberfläche, auf der die Computermaus (1) aufgelegt ist und auf der sich die Computermaus (1) durch manuelles Verstellen mittels der Hand (4) einer Person bewegen kann,
- ein an der Oberseite (5) des Gehäuses (2) angeordnetes Tastelement (6), das ausgebildet ist zu seiner Betätigung mittels eines Handballens einer Hand (4) einer Person, welche die Computermaus (1) handhabt, wobei das Tastelement (6) zwischen einer Ruhestellung, in welcher ein dem Tastelement (6) zugeordneter elektrischer Schalter (7) der Computermaus (1) sich in einen unaktivierten Schaltzustand befindet, und einer Betätigungsstellung, in welcher der dem Tastelement (6) zugeordnete elektrische Schalter (7) sich in einen aktivierten Schaltzustand befindet, verstellbar gelagert ist, und aufweisend
- eine mit dem Gehäuse (2) verbundene Handauflage (8), die über dem Gehäuse (2) und dem Tastelement (6) angeordnet ist, und die einen ebenen, horizontal verlaufenden ersten Auflageabschnitt (9.1) aufweist, der zum Ablegen der Fingerabschnitte im Handbereich der proximalen Phalangen ausgebildet ist und die einen ebenen, in Richtung des Tastelements (6) abschüssig ausgerichteten zweiten Auflageabschnitt (9.2) aufweist, der zum Ablegen der Fingerabschnitte im Handbereich der Mittelhandknochen ausgebildet ist.

2. Computermaus nach Anspruch 1, **dadurch gekennzeichnet, dass** die Handauflage (8) einen dem ebenen, horizontal verlaufenden ersten Auflageabschnitt (9.1) vorgelagerten vertikalen Stirnwandabschnitt (9.3) aufweist, der zum Anlegen der Fingerabschnitte im Handbereich der intermedialen und/oder distalen Phalangen ausgebildet ist.

3. Computermaus nach Anspruch 1 oder 2, **dadurch gekennzeichnet, dass** der ebene, in Richtung des Tastelements (6) abschüssig ausgerichtete zweite Auflageabschnitt (9.2) in einem Winkel relativ zur horizontalen Ausrichtung des ersten Auflageabschnitts (9.1) derart ausgerichtet angeordnet ist, dass sich die schräge Ebene, in welcher der zweite Auflageabschnitt (9.2) liegt mit der Ebene des Tastelements (6) in einem mittleren Bereich der Fläche des Tastelements (6) schneidet.

4. Computermaus nach einem der Ansprüche 1 bis 3, **dadurch gekennzeichnet, dass** an einem linkseitigen Rand des ersten Auflageabschnitts (9.1) und/oder des zweiten Auflageabschnitts (9.1) eine sich vom linkseitigen Rand vertikal nach oben erstreckende erste Wange (10.1) ausgebildet ist und an einem rechtsseitigen Rand des ersten Auflageabschnitts (9.1) und/oder des zweiten Auflageabschnitts (9.2) eine sich vom rechtsseitigen Rand vertikal nach oben erstreckende zweite Wange (10.2) ausgebildet ist.

5. Computermaus nach einem der Ansprüche 1 bis 4, **dadurch gekennzeichnet, dass** die Handauflage (8) mittels eines am Gehäuse (2) gelagerten Bügels (11) über dem Gehäuse (2) und dem Tastelement (6) angeordnet ist, auf dessen Bügeloberseite die Handauflage (8) befestigt oder gelagert ist.

6. Computermaus nach Anspruch 5, **dadurch gekennzeichnet, dass** die Handauflage (8) um eine vertikale erste Drehachse (D1) und/oder eine horizontale zweite Drehachse (D2) schwenkbar an der Bügeloberseite des Bügels (11) gelagert ist.

7. Computermaus nach Anspruch 5 oder 6, **dadurch gekennzeichnet, dass** der Bügel (11) in einer horizontalen Ebene verstellbar an dem Gehäuse (2) gelagert ist.

8. Computer-Eingabegerätesystem (22), aufweisend eine Computermaus (1) nach einem der Ansprüche 1 bis 7 als ein erstes Eingabegerät (23.1) und ein vom ersten Eingabegerät (23.1) mechanisch separates zweites Eingabegerät (23.2), das ein ortsfest aufzustellendes zweites Gehäuse (2a) aufweist, das eine Seitenwand (24) aufweist, an der eine Betätigungseinrichtung (25) angeordnet ist, der ein zweiter elektrischer Schalter (26) des zweiten Eingabegeräts (23.2) und ein dritter elektrischer Schalter (27) des zweiten Eingabegeräts (23.2) zugeordnet ist, und eine obere Handauflegewand (28) aufweist, die einen Ausschnitt (29) aufweist, aus dem eine um eine horizontale Drehachse (D) in dem zweiten Gehäuse (2a) drehbare gelagerte Walze (30) mit ihrer Walzenmantelwand teilweise nach oben herausragt, wobei die Walze (30) eine Walzenbreite aufweist, die sich über wenigstens die Hälfte der Breite der oberen Handauflegewand (28) erstreckt.

9. Computer-Eingabegerätesystem (22) nach Anspruch 8, **dadurch gekennzeichnet, dass** das erste Eingabegerät (23.1) und das zweite Eingabegerät (23.2) in ihren an einem gemeinsamen Computer (32) angeschlossenen Zustand derart konfiguriert sind, dass die Funktion der Steuerung des Mauszeigers mittels des ersten Eingabegerätes (23.1) möglich ist und die Funktionen eines linken Mausklicks, eines rechten Mausklicks und einer Scroll-Funktion mittels des zweiten Eingabegerätes (23.2) möglich ist.

10. Computer-Eingabegerätesystem (22) nach Anspruch 8, **dadurch gekennzeichnet, dass** das erste Eingabegerät (23.1) und das zweite Eingabegerät (23.2) in ihren an einem gemeinsamen Computer (32) angeschlossenen Zustand derart konfiguriert sind, dass die Funktion der Steuerung des Mauszeigers mittels der Computermaus (1) sowie die Funktion entweder eines linken Mausklicks oder eines rechten Mausklicks mittels des Tastelements (6) der Computermaus (1) möglich ist und eine Scroll-Funktion mittels des zweiten Eingabegerätes (23.2) möglich ist.
